# EUROPÄISCHE PATENTSCHRIFT

(11) **EP 4 485 783 B1**
(45) Veröffentlichungstag und Bekanntmachung des Hinweises auf die Patenterteilung: **27.05.2026**
(21) Anmeldenummer: 23181665.3
(22) Anmeldetag: 27.06.2023
(51) Int. Cl.: H02M 7/12, H01F 29/02, C25B 1/04

(54) **ENERGIEVERSORGUNGSVORRICHTUNG FÜR EINEN ELEKTROLYSEUR, ELEKTROLYSEVORRICHTUNG SOWIE VERFAHREN ZUM STEUERN DER VORRICHTUNG**
POWER SUPPLY DEVICE FOR AN ELECTROLYSER, ELECTROLYSER, AND METHOD FOR CONTROLLING THE DEVICE
DISPOSITIF D'ALIMENTATION EN ÉNERGIE POUR ÉLECTROLYSEUR, DISPOSITIF D'ÉLECTROLYSE ET PROCÉDÉ DE COMMANDE DU DISPOSITIF

(43) Veröffentlichungstag der Anmeldung: 01.01.2025
(73) Patentinhaber: Innomotics GmbH, 90441 Nürnberg (DE)
(72) Erfinder: Lobmeyer, Stefan, 94072 Irching (DE); Schwimmbeck, Franz, 94099 Ruhstorf (DE)
(74) Vertreter: Michalski Hüttermann & Partner Patentanwälte mbB

(56) Entgegenhaltungen:
- DE-A1- 102014 002 348
- DE-C- 638 706

## Beschreibung

Die Erfindung betrifft eine Energieversorgungsvorrichtung für einen Elektrolyseur, wobei die Energieversorgungsvorrichtung eine Eingangsschaltung und einen Stromrichter aufweist, wobei die Eingangsschaltung eingerichtet ist, mit einer Energiequelle oder einem Energieversorgungsnetz verbunden zu werden. Ferner betrifft die Erfindung eine Elektrolysevorrichtung mit einer derartigen Energieversorgungsvorrichtung und einem Elektrolyseur. Die Erfindung betrifft weiter ein Verfahren zum Steuern einer derartigen Energieversorgungsvorrichtung oder einer derartigen Elektrolysevorrichtung sowie eine Verwendung einer derartigen Energieversorgungsvorrichtung oder einer derartigen Elektrolysevorrichtung für die Erzeugung von Wasserstoff.

Mit Hilfe eines Elektrolyseurs lässt sich eine Stoffumwandlung als chemische Reaktion herbeiführen. Dabei findet eine Elektrolyse statt. Der Elektrolyseur wird dazu aus einer Energiequelle mit elektrischer Energie versorgt. Eine Wechselspannung der Energiequelle wird dabei mittels eines Stromrichters in eine Gleichspannung für den Elektrolyseur umgewandelt. Daher wird dieser Stromrichter auch als Gleichrichter bezeichnet. Als Stromrichter kommen dazu netzgeführte Stromrichter wie Diodengleichrichter oder Thyristorstromrichter, auch als thyristorgesteuerte Stromrichter bezeichnet, zum Einsatz. Alternativ oder in Kombination dazu werden auch selbstgeführte Stromrichter, beispielsweise auf der Basis von IGBTs, eingesetzt. Diese selbstgeführten Stromrichter werden aufgrund ihres gepulsten Betriebs auch als Pulsstromrichter bezeichnet.

Zur Anpassung unterschiedlicher Spannungsebenen von Energiequelle und Elektrolyseur kommt häufig ein Transformator zum Einsatz, der zwischen Energiequelle und Elektrolyseur angeordnet ist.

Im Folgenden wird mit Spannungslevel ein Spannungsniveau bezeichnet. Ein Maß für das Spannungslevel stellt beispielsweise die Amplitude bei einem sinusförmigen Spannungsverlauf oder der Effektivwert bei einem periodischen Spannungsverlauf dar.

Zukünftig wird die Elektrolyse bei der wirtschaftlichen und umweltfreundlichen Erzeugung von Wasserstoff beispielsweise als synthetischer Kraftstoff an Bedeutung gewinnen. Dabei wird mittels eines Elektrolyseurs bzw. einer entsprechenden Elektrolysevorrichtung Wasserstoff erzeugt. Dieser Kraftstoff auf der Basis von Wasserstoff kann signifikant zur Senkung von klimaschädlichen CO₂ Emissionen beitragen.

Aus der DE 10 2014 002348 A1 ist ein Verfahren zur Herstellung von Wasserstoff bekannt, bei dem man elektrische Leistung aus dem Netz bezieht und dazu eine netzseitige Primärspannung mittels eines Transformators auf eine gleichrichterseitige Sekundärspannung heruntertransformiert, welche mit einem zur Bereitstellung eines für einen den Wasserstoff durch Elektrolyse erzeugenden und seinen Zustand im Verlauf seiner Lebensdauer ändernden Elektrolyseur vorgesehenen Gleichstroms eingestellten Gleichrichters gleichgerichtet wird, wobei man eine netzseitige Anzapfung des Transformators in Abhängigkeit des Elektrolyseurzustands in abgestufter Weise ändert.

Der Erfindung liegt die Aufgabe zugrunde, die Energieversorgung für einen Elektrolyseur und für eine Elektrolysevorrichtung zu verbessern.

Diese Aufgabe wird durch eine Energieversorgungsvorrichtung mit den Merkmalen des Anspruchs 1 gelöst. Diese Aufgabe wird ferner durch eine Elektrolysevorrichtung aufweisend eine derartige Energieversorgungsvorrichtung und einen Elektrolyseur gelöst, wobei der Stromrichter ausgangsseitig mit dem Elektrolyseur elektrisch verbunden ist. Weiter wird diese Aufgabe durch ein Verfahren zum Steuern einer derartigen Energieversorgungsvorrichtung oder einer derartigen Elektrolysevorrichtung gelöst, wobei der Stromrichter mit einem der durch die Eingangsschaltung erzeugten Spannungslevel betrieben wird, wobei zum Wechseln des Spannungslevels mindestens ein Leiter der Energieversorgungsvorrichtung von einem ersten Kontakt der Kontakte zu einem zweiten Kontakt der Kontakte manuell umgeklemmt wird. Ferner wird diese Aufgabe durch die Verwendung einer derartigen Energieversorgungsvorrichtung oder einer derartigen Elektrolysevorrichtung zur Erzeugung von Wasserstoff mittels Elektrolyse gelöst.

Weitere vorteilhafte Ausgestaltungen der Erfindung sind in den abhängigen Ansprüchen angegeben.

Der Erfindung liegt unter anderem die Erkenntnis zugrunde, dass sich der Betrieb eines Elektrolyseurs durch den vorgeschlagenen Aufbau der Energieversorgungsvorrichtung für den Elektrolyseur und durch eine Elektrolysevorrichtung mit einer entsprechenden Energieversorgungsvorrichtung deutlich verbessern lässt, wenn der Effekt der Alterung durch den Betrieb des Elektrolyseurs berücksichtigt wird.

Elektrolyseure unterliegen im Betrieb der Alterung. Es ist zu beobachten, dass sich die Leistungsfähigkeit des Elektrolyseurs, insbesondere die pro Zeiteinheit entstehende Menge des gewünschten Elektrolyseprodukts wie beispielsweise Wasserstoff, über die Zeit abnimmt. Um diesem Effekt entgegenzuwirken, hat es sich als vorteilhaft erwiesen, die Gleichspannung am Elektrolyseur über die Zeit anzuheben, um den gleichen Stromfluss zu erzeugen, der zu einer unveränderten Menge des zu erzeugenden Elektrolyseproduktes führt. Dabei wird die ausgangsseitige Spannung des Stromrichters, die Gleichspannung, entsprechend erhöht. Mit der erhöhten Spannung am Elektrolyseur bei gleichbleibendem Strom wächst die vom Stromrichter übertragene Leistung. Somit erhöht sich analog die Wirkleistung am Eingang des Stromrichters. Aufgrund der konstanten Netzspannung führt die erhöhte Wirkleistung zu einem erhöhten eingangsseitigen Strom am Stromrichter. Dieser eingangsseitig erhöhte Strom und die ausgangsseitig erhöhte Spannung gehen in die Auslegung und Dimensionierung der Halbleiter des Stromrichters ein und führen zu einer Überdimensionierung dieser Bauelemente.

Mit zunehmender Alterung wird dann der Zündverzögerungswinkel α eines Thyristorstromrichters verkleinert. Bei einem Pulsstromrichter führt eine höhere Ausgangsspannung zu einem geringeren Modulationsgrad m, auch als Aussteuergrad bezeichnet, um die Ausgangsspannung anzupassen. Der entsprechende Stromrichter kann somit, insbesondere im Hinblick auf seine eingangsseitigen Größen, nicht über seine gesamte Lebensdauer im optimalen Betriebspunkt betrieben werden.

Mit größerem Zündverzögerungswinkel gerade zu Beginn der Lebensdauer wächst darüber hinaus auch die Blindleistung des Thyristorstromrichters, so dass sich eingangsseitig mit größerem Zündverzögerungswinkel auch ein größerer Eingangsstrom durch den Blindstrom ergibt und eine entsprechende größere Dimensionierung der Halbleiter erforderlich macht. Daher hat es sich für die Dimensionierung als vorteilhaft erwiesen, den über die Lebensdauer Betriebsbereich des Zündverzögerungswinkels α gering und bei kleinen Werten zu halten.

Der Aussteuergrad eines Pulsstromrichters ist aufgrund der Dioden bzw. des Hochsetzstellerbetriebs begrenzt. Bei einer gegebenen Ausgangsspannung des Stromrichters ergibt sich eine maximale Eingangsspannung.

Somit wird der Stromrichter über seine gesamte Lebensdauer und insbesondere gerade zu Beginn seiner Lebensdauer nicht optimal ausgenutzt. Zur Kompensation dieser sich ändernden Eigenschaften über die Lebensdauer findet eine Überdimensionierung des Stromrichters, insbesondere der darin angeordneten Halbleiter, statt.

Die Energieversorgungsvorrichtung ist eingerichtet, mit einer Energiequelle verbunden zu werden. Die Energiequelle kann dabei beispielsweise als Spannungsquelle ausgebildet sein. Die Energiequelle kann Teil eines Energieversorgungsnetzes sein, so dass die Energieversorgungsvorrichtung auch zur Verbindung mit einem Energieversorgungsnetz eingerichtet ist. Dabei kann das Energieversorgungsnetz als Verbundnetz oder als Inselnetz ausgebildet sein. Ebenso ist es möglich, dass die Spannungsquelle beispielsweise durch eine Energieerzeugungsanlage wie beispielsweise eine Windkraftanlage oder eine Solaranlage gebildet wird, die zur umweltfreundlichen Erzeugung des Wasserstoffs beiträgt. Gerade eine Energiequelle mit einer prinzipbedingten Schwankung der Energieerzeugung bietet sich für die Elektrolyse an, da auch Spitzenleistungen aufgrund eines hohen Windaufkommens oder einer hohen Sonnenstrahlung für die Wasserstoffproduktion vorteilhaft genutzt werden können. Dies ergibt eine besonders hohe Ausnutzung von regenerativen Energiequellen und trägt zu einer besonders umweltfreundlichen Erzeugung des Energieträgers Wasserstoff bei.

Um den Stromrichter besser ausnutzen und betreiben zu können, wird erfindungsgemäß vorgeschlagen, die Eingangsspannung des Stromrichters derart variabel zu gestalten, dass die Eingangsschaltung der Energieversorgungsvorrichtung unterschiedliche elektrische Potentiale an unterschiedlichen Kontakten aufweist. Mit diesen unterschiedlichen elektrischen Potentialen lassen sich unterschiedliche Spannungslevel bilden. Dabei ergeben sich die unterschiedlichen Spannungslevel beispielsweise als Differenz unterschiedlicher, elektrischer Potentiale zwischen unterschiedlichen Kontakten oder als elektrisches Potential gegenüber einem Bezugspotential, das an der Eingangsschaltung und dem Stromrichter vorhanden ist. Als Bezugspotential kann beispielsweise das Erdpotential oder das Potential eines Sternpunktes eines mehrphasigen Spannungssystems genutzt werden. Damit ist der Eingang des Stromrichters mit unterschiedlichen Spannungslevel verbindbar. Die unterschiedlichen elektrischen Potentiale erzeugt die Eingangsschaltung aus der Netzspannung und stellt diese an unterschiedlichen den Kontakten bereit. Eine Möglichkeit der Erzeugung ist beispielsweise die Verwendung eines Transformators, eines Transformators oder eines Spannungsteilers.

Wird der Stromrichter eingangsseitig durch eine dreiphasige Energiequelle bzw. Spannungsquelle gespeist, so sind vorteilhafterweise für jedes Spannungslevel drei Kontakte vorhanden. Dabei können einzelne Kontakte jeweils in unterschiedlicher Kombination zur Erzeugung unterschiedlicher Spannungslevel genutzt werden. Bei der Speisung mittels einer einphasigen Energiequelle bzw. Spannungsquelle ist nur ein Kontakt für jedes Spannungslevel erforderlich.

Unterschiedliche Spannungslevel können sich beispielsweise in der Amplitude der Spannung oder im Effektivwert der Spannung unterscheiden. Da die Alterung ein langsam fortschreitender Prozess ist, kann in einem einfachen Anwendungsfall die Eingangsschaltung zwei unterschiedliche Spannungslevel an jeweils einem Kontakt gegenüber einem Bezugspotential oder bei einem dreiphasigen Netz an drei Kontakten bereitstellen. Damit ist ein Wechsel zwischen diesen Spannungslevel nur ein Mal während der gesamten Lebensdauer erforderlich.

Aufgrund dieses über die gesamte Lebenszeit extrem seltenen Wechselns der Spannungslevel hat es sich als vorteilhaft erwiesen, wenn das Wechseln der Spannungslevel durch manuelles Umklemmen von mindestens einem Leiter zwischen dem Stromrichter und der Eingangsschaltung geschieht. Dabei ist die Energieversorgungsvorrichtung eingerichtet, dass ein Wechsel des mit dem Stromrichter verbundenen Kontaktes durch ein Umklemmen mindestens eines Leiters der Energieversorgungsvorrichtung derart erfolgt, dass sich das Spannungslevel an den eingangsseitigen Anschlüssen des Stromrichters ändert. Der Leiter kann dabei beispielsweise als Kabel oder Stromschiene ausgebildet sein. Damit kann auf eine kostspielige Schaltvorrichtung, insbesondere eine automatisierte Schaltvorrichtung, verzichtet werden. Der Vorteil der geringen Kosten für eine derartige Anpassung der Eingangsspannung des Stromrichters überwiegt den Nachteil, dass der Prozess der Elektrolyse, d.h. der Betrieb des Elektrolyseurs für die Dauer des manuellen Umklemmens unterbrochen werden muss, um die Sicherheit des Bedienpersonals, insbesondere die Berührsicherheit, zu gewährleisten.

Das Nutzen der unterschiedlichen Spannungslevel führt beispielsweise bei einem Pulsstromrichter zum einen zu einer Verringerung des Eingangsstroms, der sich aus der erhöhten Wirkleistung ergibt. Darüber hinaus reduziert sich bei dem Thyristorstromrichter die Belastung der Halbleiter durch eine Verringerung der Blindleistung aufgrund des geringeren Arbeitsbereichs des Zündverzögerungswinkels.

Als besonders vorteilhaft hat sich das Umklemmen für eine Energieversorgungsvorrichtung erwiesen, bei der die erzeugbaren Spannungslevel im Bereich der Mittelspannung liegen. Der Bereich der Mittelspannung deckt eine Wechselspannung von mehr als 1000 V und eine Gleichspannung von mehr als 1500 V ab. In diesem Fall würden Geräte zum automatisierten Schalten besonders groß und teuer ausfallen. Ebenso machen Sicherheitsauflagen ein derartiges automatisierten Schalten aufwendig und teuer. Durch die seltenen Umklemmvorgänge kann durch das manuelle Umklemmen gerade bei Spannungslevel im Mittelspannungsbereich eine besonders kostengünstige Energieversorgungsvorrichtung mit geringen baulichen Abmessungen angegeben und realisiert werden. Auch das Risiko einer Fehlbedienung ist somit gering.

Selbst wenn die Eingangsschaltung eine Vielzahl von Spannungslevel erzeugt und an einem entsprechenden jeweiligen Kontakt zur Verfügung stellt, sind die Anzahl der Umklemmhandlungen über die Lebensdauer immer noch sehr gering. Vorzugsweise erfolgt ein Umklemmen nach einer Betriebszeit von mehr als einem Jahr, insbesondere nach drei Jahren oder fünf Jahren. Geht man davon aus, dass es zu festgelegten Zeitpunkten, beispielsweise aufgrund von Wartungsarbeiten am Elektrolyseur, zu eine Betriebsunterbrechung kommt, stellt das manuelle Umklemmen keine wesentliche Beeinträchtigung des Elektrolyseprozesses dar, da es während einer der Wartungszeiträume durchgeführt werden kann.

Unterschiedliche Spannungslevel werden mittels eines Spartransformators oder eines Spannungsteilers auf einfache Weise erzeugt. Dabei kann der Spartransformator an einer Wicklung zwei oder mehr Abgriffe aufweisen, an denen gegenüber einem Bezugspotential ein unterschiedliches Spannungslevel anliegt. Damit erzeugt der Spannungsteiler zumindest einen Teil der unterschiedlichen elektrischen Potentiale, die an den jeweiligen Kontakten anliegen. Diese Abgriffe bilden dann jeweils einen Kontakt der Eingangsschaltung. Ebenso kann ein Spannungsteiler, verlustarm beispielsweise ausgestaltet als ein induktiver oder kapazitiver Spannungsteiler, zur Erzeugung unterschiedlicher Spannungslevel dienen. Der Vorteil dieser Komponenten liegt darin, dass es sich um Standardkomponenten der Elektrotechnik handelt, die einfach, zuverlässig und vor allem kostengünstig im Vergleich zu Schaltvorrichtungen zur Verfügung stehen.

Die Erzeugung unterschiedlicher Spannungslevel erfolgt dabei in Kombination von Transformator und einem oder mehreren Spannungsteilern.

Der vorgeschlagene Aufbau der Energieversorgungsvorrichtung ist insbesondere für Thyristorstromrichter von Vorteil. Durch den vorgeschlagenen Aufbau reduziert sich die Bandbreite des Zündverzögerungswinkels α mit dem der Stromrichter betrieben wird. Das heißt anders ausgedrückt, dass der Stromrichter näher an seinem Optimum von ∝≈ 0° betrieben wird und die Abweichung von diesem Arbeitspunkt geringer ist. Neben der vorteilhaft hohen Ausnutzung der Wirkleistung des Stromrichters wird darüber hinaus gleichzeitig auch die Blindleistung am wechselspannungsseitigen Eingang des Stromrichters reduziert. So reduziert sich der Eingangsstrom sowohl durch den geringeren Wirkstrom als auch durch den geringeren Blindstrom. Damit ist der Anteil des Wirkstroms am Gesamtstrom am Eingang des Stromrichters besonders hoch. Dies führt ebenfalls zu einer besonders guten Ausnutzung des Thyristorstromrichters und ermöglicht eine anwendungsbezogene Dimensionierung des Stromrichters.

Auch bei einem Pulsstromrichter mit selbstgeführten Halbleitern ist der vorgeschlagene Aufbau besonders vorteilhaft, da dieser den Betrieb bei einem optimalen Aussteuergrad ermöglicht. Da es sich bei diesem Stromrichtertyp um eine Hochsetzsteller-Schaltung handelt, darf die Eingangsspannung eines Stromrichters nicht größer sein als etwa das 1/√2 fache der minimal nötigen Ausgangsspannung. Bisher hat man die Stromrichter so dimensioniert, dass die Eingangsspannung immer diesem geringen Wert entspricht. Damit arbeitet der Stromrichter mit kleiner werdendem Modulationsgrad, je weiter die Alterung des Elektrolyseurs voranschreitet und je höher seine Ausgangsspannung ist. Der Netzstrom, also der Eingangsstrom, des Stromrichters orientiert sich an der aktuellen Leistung sowie Netzspannung und bestimmt die notwendige Stromtragfähigkeit der Halbleiterschalter. Deshalb ist die Auslegung der Leistungshalbleiter überdimensioniert, um dem Streubereich der Ausgangsspannung gerecht zu werden. Denn mit abnehmenden Aussteuergrad nimmt die Ausnutzung der vorhandenen Halbleiter im Stromrichter deutlich ab, so dass die vorhandenen Elemente nicht optimal ausgenutzt werden. Darüber hinaus können Auslegungsreserven bei einem optimalen Aussteuergrad dazu genutzt werden, weitere Funktionen auszuführen, wie beispielsweise eine Blindleistungsregelung zur Stützung des Energieversorgungsnetzes in einem Fehlerfall.

Das vorgeschlagene Verfahren und die vorgeschlagene Vorrichtung können in besonders vorteilhafter Weise zur Erzeugung von Wasserstoff genutzt werden. Aufgrund der relativ geringen Spannung von 1 bis 2 Volt zwischen den Elektroden stellt bereits eine geringe betragliche Änderung der Spannung zwischen den Elektroden eine hohe relative Veränderung dar. Werden dann eine Vielzahl von Elektroden in Reihe im Elektrolyseur angeordnet, ergibt sich gerade bei der Herstellung von Wasserstoff mittels Elektrolyse ein großer, durch die Ausgangsspannung des Stromrichters abzudeckender Spannungsbereich. Wie zuvor erläutert erfordert dieser eine entsprechende Überauslegung der Halbleiter. Der Betrieb des Elektrolysevorrichtung kann durch den vorgeschlagenen Aufbau wesentlich effizienter ausgeführt werden, da eine derartige Überdimensionierung nicht mehr erforderlich ist. Somit eignet sich das vorgeschlagene Verfahren besonders als Verfahren zur Erzeugung von Wasserstoff mittels einer derartigen Energieversorgungsvorrichtung oder einer derartigen Elektrolysevorrichtung.

Bei einer vorteilhaften Ausgestaltung der Erfindung weist die Elektrolysevorrichtung eine Vielzahl von Elektrolyseuren auf, wobei die Elektrolyseure in einer Reihenschaltung angeordnet sind, wobei die Reihenschaltung mit dem Stromrichter der Energieversorgungsvorrichtung elektrisch verbunden ist. Insbesondere bei der Elektrolyse zur Erzeugung von Wassersoff hat es sich als vorteilhaft erwiesen, mehrere Elektrodenpaare innerhalb eines Elektrolyseurs in einer Reihenschaltung anzuordnen oder, alternativ oder ergänzend, eine Vielzahl von Elektrolyseuren in einer Reihenschaltung anzuordnen. Damit können verfügbare Elemente der Leistungselektronik auf einfache Weise für die Erzeugung von Wasserstoff genutzt werden, indem mit der Reihenschaltung die Elektrolyseure an die verfügbaren Stromrichter angepasst werden. Entsprechende Stromrichter sind für eine Ausgangsspannung von einigen hundert Volt bis in den Bereich von mehr als 1000V und auch mehr als 1500V und auch darüber hinaus im Bereich der Mittelspannung und Hochspannung verfügbar. Mit diesen Stromrichtern lässt sich eine kostengünstige Elektrolysevorrichtung realisieren und Wasserstoff wirtschaftlich herstellen.

Bei einer weiteren vorteilhaften Ausgestaltung der Erfindung ist die Elektrolysevorrichtung zur Erzeugung von Wasserstoff eingerichtet. Durch die relativ geringe Zersetzungsspannung von Wasser wirken sich Änderungen bei der vom Elektrolyseur benötigten Spannung aufgrund der Alterung relativ stark auf die Ausgangsspannung des Stromrichters aus. Durch den vorgeschlagenen Aufbau kann der Stromrichter dennoch über große Zeitbereiche der Lebensdauer in einem wirtschaftlichen Arbeitspunkt betrieben werden, bei dem die Halbleiter eine hohe Ausnutzung erfahren und Überdimensionierungen nur zu einem geringen Maße erforderlich sind. Dadurch können gerade die Probleme in der Energieversorgung des Elektrolyseurs auf einfache und wirtschaftliche Weise beseitigt werden. Damit eignet sich die Elektrolysevorrichtung im Besonderen für die Erzeugung von umweltfreundlichem Wasserstoff.

Bei einer weiteren vorteilhaften Ausgestaltung der Erfindung wird bei Wechsel des Spannungslevels in einem ersten Schritt eine Energieübertragung von der Eingangsschaltung zum Stromrichter unterbrochen, wobei in einem zweiten Schritt der Leiter der Energieversorgungvorrichtung manuell umgeklemmt wird, wobei in einem dritten Schritt die Energieübertragung von der Eingangsschaltung zum Stromrichter wiederhergestellt wird. Gegenüber einer automatisierten Schalthandlung beispielsweise mit Hilfe eines Schaltgerätes oder eines Schützes, ist das vorgeschlagene Verfahren langsam. Da der Schaltvorgang, das manuelle Umklemmen, nur sehr selten durchgeführt werden muss, kann für den Umklemmvorgang beispielsweise ein Zeitpunkt der Wartung, insbesondere der Wartung des Elektrolyseures, vorgesehen werden. Zum Zeitpunkt der Wartung wird die Elektrolysevorrichtung abgeschaltet um Wartungsarbeiten an Komponenten wie beispielsweise dem Elektrolyseur durchzuführen. Auch für die Wartung wird die Energieversorgung analog zum ersten Schritt des vorgeschlagenen Verfahrens unterbrochen. Auch der dritte Schritt der Wiederherstellung der Energieübertragung ist Teil der Wartung, so dass sich eine Synergie zwischen den Wartungsarbeiten und der Anpassung des Spannungslevels ergibt. Das manuelle Umklemmen kann dann als Teil der Wartung oder alternativ parallel zu den Wartungsarbeiten am Elektrolyseur oder dessen Energieversorgungsvorrichtung vorgenommen werden. Durch die Verfahrensschritte ist darüber hinaus die Berührsicherheit bei Wartungsarbeiten und dem Umklemmvorgang sichergestellt.

Bei einer weiteren vorteilhaften Ausgestaltung der Erfindung wird das Verfahren gestartet, wenn die ausgangsseitige Spannung des Stromrichters einen festgelegten Grenzwert überschreitet. Um einen effizienten Betrieb des Elektrolyseurs zu gewährleisten, kann ein Grenzwert, beispielsweise in Abhängigkeit von der Alterung und/oder von Strommesswerten, insbesondere von Strommesswerten an den wechselspannungsseitigen Anschlüssen des Stromrichters, angegeben werden, bei dem das Spannungslevel gewechselt wird. Dabei wird dann beispielsweise für die Speisung des Stromrichters ein Spannungslevel mit einer höheren Spannung bzw. höheren Spannungen gewählt. Dies verringert nicht nur die Eingangsströme, d.h. die wechselspannungsseitigen Ströme, des Stromrichters, sondern erhöht auch den Wirkungsgrad der Energieversorgungsvorrichtung durch einen geringen Modulationsgrad. Ebenso erlaubt diese Vorgehensweise, den Stromrichter mit nur einer geringen Bandbreite des Zündverzögerungswinkels α und damit mit geringem Blindleistungsanteil zu betreiben.

Im Folgenden wird die Erfindung anhand der in den Figuren dargestellten Ausführungsbeispiele näher beschrieben und erläutert. Es zeigen:

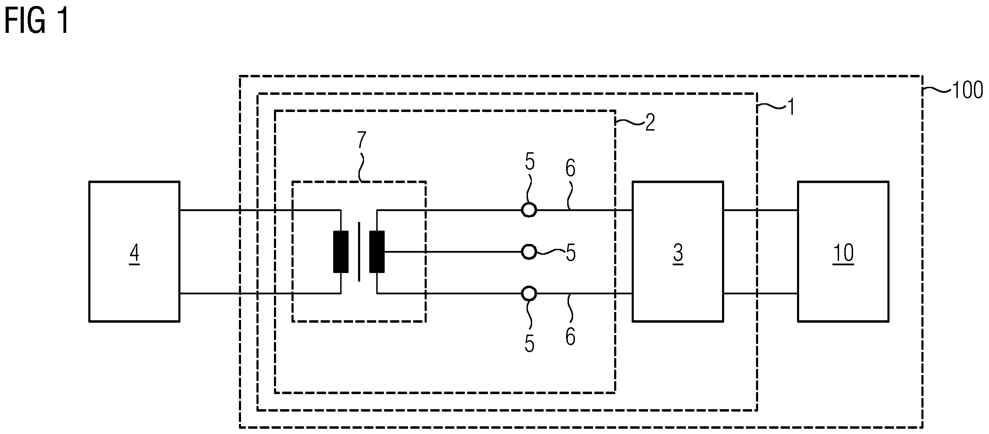

FIG 1 bis FIG 3: Beispiele von Energieversorgungsvorrichtung und Elektrolysevorrichtung außerhalb der Erfindung.
FIG 4 bis FIG 6:
   Ausführungsbeispiele von Energieversorgungsvorrichtung und Elektrolysevorrichtung.

Die FIG 1 zeigt eine Elektrolysevorrichtung 100. Diese weist einen Elektrolyseur 10 auf, der von einer Energieversorgungsvorrichtung 1 mit elektrischer Energie versorgt wird. Diese elektrische Energie wird mit einer Gleichspannung übertragen. Dazu ist die Energieversorgungsvorrichtung 1 mit einer Energiequelle 4 elektrisch verbunden. Die Energiequelle 4, beispielsweise ausgebildet als Spannungsquelle, kann dabei Teil eines Energieversorgungsnetzes sein. Die Energieversorgungsvorrichtung 1 umfasst eine Eingangsschaltung 2 und einen Stromrichter 3. Die Eingangsschaltung 2 erzeugt aus der Spannung der Energiequelle 4 unterschiedliche elektrische Potentiale, die jeweils an einem der Kontakte 5 anliegen. Ein Teil der Kontakte 5 ist mittels Leiter 6 mit einem der wechselspannungsseitigen Anschlüssen des Stromrichters 3 verbunden. Über unterschiedliche Kontakte 5 ist somit der Stromrichter 3 mit unterschiedlichen Spannungslevel verbindbar. Um das Spannungslevel zu wechseln, ist mindestens ein Leiter 6 von einem ersten Kontakt der Kontakte 5 zu lösen und mit einem zweiten Kontakt der Kontakte 5 zu verbinden. Der Stromrichter 3 erzeugt aus der Wechselspannung am wechselspannungsseitigen Eingang des Stromrichters 3 eine Gleichspannung am Ausgang des Stromrichters 3. Mit dieser Gleichspannung wird der Elektrolyseur 10 gespeist.

Die unterschiedlichen elektrischen Potentiale der Kontakte 5 und die damit einhergehenden unterschiedlichen Spannungslevel zwischen den Kontakten 5 und gegenüber einem Bezugspotential, insbesondere dem Erdpotential oder dem Sternpunkt eines mehrphasigen Spannungssystems, werden in diesem Beispiel außerhalb der Erfindung ausschließlich mittels eines Transformators 7 erzeugt, der sekundärseitig mehrere Abgriffe aufweist, die jeweils mit einem jeweiligen Kontakt 5 elektrisch verbunden sind. Bei beispielsweise drei elektrischen Kontakten 5 lassen sich somit bis zu drei Spannungslevel zwischen jeweils zwei der drei Kontakte 5 erzeugen. Zudem sind drei weitere Spannungen zwischen einem der Kontakte 5 und einem Bezugspotential erzeugbar.

Eine Änderung des mit dem Stromrichter 3 verbundenen Spannungslevels wird durch Umklemmen mindestens eines Leiters 6 von einem ersten Kontakt zu einem zweiten Kontakt erzielt. Das Umklemmen erfolgt erfindungsgemäß manuell, so dass auf Schaltgeräte, die ein automatisiertes Umschalten realisieren, verzichtet werden kann.

In diesem Beispiel ist eine einphasiges Energieversorgungsvorrichtung mit einem festen Bezugspotential bzw. eine zweiphasige Energieversorgungsvorrichtung 1 dargestellt. Alternativ können die Kontakte 5 bzw. ein Teil der Kontakte 5 ein dreiphasiges Spannungssystem zur Verbindung mit einem dreiphasigen Stromrichter 3 bilden.

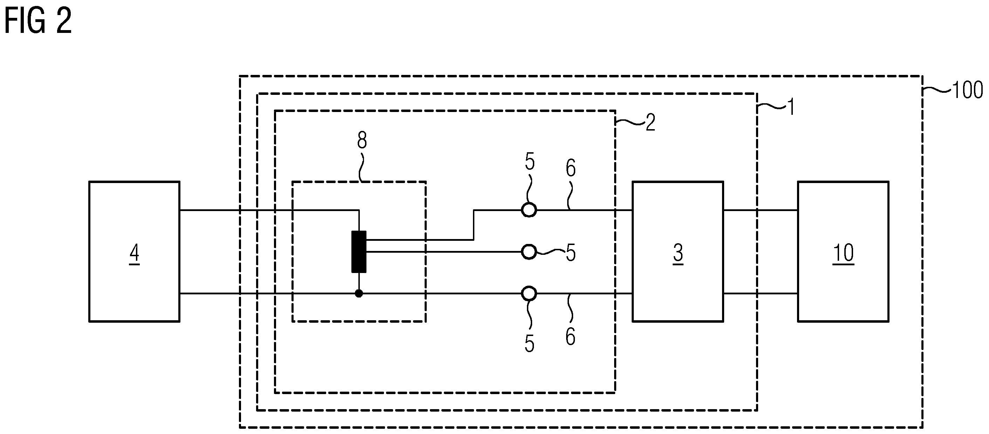

Die FIG 2 zeigt ein weiteres Beispiel außerhalb der Erfindung für eine Energieversorgungsvorrichtung 1 und eine Elektrolysevorrichtung 100. Zur Vermeidung von Wiederholungen wird auf die Beschreibung zu der FIG 1 sowie auf die dort eingeführten Bezugszeichen verwiesen. Anstelle des Transformators 7 der FIG 1 ist in der FIG 2 zur Erzeugung unterschiedlicher elektrischer Potentiale an den Kontakten 5 ein Spannungsteiler 8 in der Eingangsschaltung 2 vorgesehen. Dieser kann, wie dargestellt, als Spartransformator ausgebildet sein. Um das Spannungslevel zu ändern, kann ein Leiter von einem Kontakt 5 zu einem anderen Kontakt 5 umgeklemmt werden. Alternativ zu dem Spartransformator kann der Spannungsteiler 8 auch als induktiver Spannungsteiler mit mindestens zwei Induktivitäten ausgebildet sein. Alternativ kann der Spannungsteiler 8 auch als kapazitiver Spannungsteiler mit mindestens zwei Kondensatoren ausgestaltet sein. Weiter kann der Spannungsteiler 8 alternativ als ohmscher Spannungsteiler mit mindestens zwei Widerstanden ausgestaltet sein.

Die dargestellte einphasige bzw. zweiphasige Ausgestaltung der Eingangsschaltung 2 und des Stromrichters 3 kann auch durch eine mehrphasige, insbesondere eine dreiphasige Ausgestaltung, ersetzt werden. Durch die dreiphasige Ausgestaltung kann beispielsweise durch die Verwendung eines Nullsystems die Spannungsausnutzung des Stromrichters 3 weiter verbessert werden.

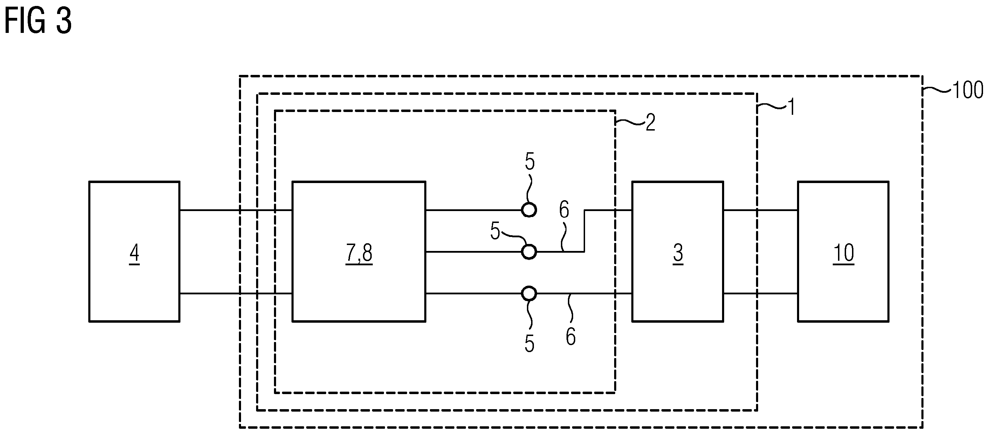

Die FIG 3 zeigt ein Beispiel außerhalb der Erfindung für eine Energieversorgungsvorrichtung 1 und eine Elektrolysevorrichtung 100. Zur Vermeidung von Wiederholungen wird auf die Beschreibung zu den Figuren 1 und 2 sowie auf die dort eingeführten Bezugszeichen verwiesen. Bei diesem Beispiel sind mittels der Leiter 6 im Vergleich zu den Beispielen der Figuren 1 und 2 andere Kontakte 5 der Eingangsschaltung 2 mit dem Stromrichter 3 verbunden. Diese Anordnung liefert eine in der Amplitude geringere Eingangsspannung an den Stromrichter 3. Dadurch eignet sich diese Verschaltung für den Betrieb des Elektrolyseurs 10 insbesondere für den Beginn der Lebensdauer. Mit fortschreitender Alterung des Elektrolyseurs 10 ergibt sich der Bedarf an einer höheren Gleichspannung am Eingang des Elektrolyseurs 10 und damit am Ausgang des Stromrichters 3. Sobald sich diese höhere Ausgangsspannung durch den Stromrichter 3 nicht mehr erzeugen lässt, da beispielsweise der Modulationsgrad bereits sein Minimum angenommen hat oder der Zündverzögerungswinkel α beispielsweise bereits einen Wert bei α≈0 annimmt, wird durch Umklemmen mindestens eines Leiters 6 der Leiter 6 eine höhere Eingangsspannung am Eingang des Stromrichters 3 angelegt. Nun kann bei fortschreitender Alterung eine höhere Ausgangsspannung am Stromrichter 3 verlustarm und effizient erzeugt werden, ohne einen unzulässig hohen Blindstromanteil zu erzeugen. Ebenso werden die Halbleiter des Stromrichters 3 durch die Möglichkeit des Umklemmens optimal ausgenutzt. Beim Umklemmvorgang wird mindestens ein Leiter 6 von dem Kontakt 5, mit dem dieser verbunden ist, getrennt und mit einem anderen Kontakt 5 verbunden. Dieser Vorgang wird als Umklemmen bezeichnet, wenn er von Hand, d.h. manuell, durchgeführt wird. Bei einer einphasigen oder zweiphasigen Ausgestaltung des Stromrichters 3 genügt es oftmals, nur einen Leiter 6 umzuklemmen. Bei einer mehrphasigen Ausgestaltung des Stromrichter 3, insbesondere bei einer dreiphasigen Ausgestaltung des Stromrichters 3 hat es sich als günstig, allerdings nicht notwendig, erwiesen, drei Leiter 6 auf andere Kontakte 5 umzuklemmen. Als Kriterium zur Erkennung einer fortgeschrittenen Alterung, die ein Umklemmen vorteilhaft macht, hat sich beispielsweise das Überschreiten eines Stromgrenzwertes am Eingang des Stromrichters 3 als vorteilhaft erwiesen. Alternativ kann das Umklemmen bei Erreichen eines vorgegebenen Wertes für den Modulationsgrad, beispielsweise in der Nähe von m=1, oder für den Zündverzögerungswinkel, beispielsweise in der Nähe von α=0, erfolgen. In der Nähe von α=0 bezeichnet dabei beispielsweise einen Winkelbereich bis 5° oder bis 10°. In diesem Fall wird mittels des Modulationsgrads m oder des Zündverzögerungswinkels α eine Bedingung zur Auslösung des Umklemmvorgangs definiert.

Um eine möglichst feinstufige Umschaltung in einer dreiphasigen Anordnung zu ermöglichen, hat es sich als vorteilhaft erwiesen, auch bei einer dreiphasigen Anordnung nur einen Leiter 6 umzuklemmen. Die im Drehspannungsnetz auftretenden Unsymmetrien, beispielsweise erkennbar an einem Phasenunterschied von ungleich 120°, können vom Stromrichter 3 ausgeglichen werden.

Nach dem Umklemmen ergibt sich dann eine Konfiguration wie in einer der Figuren 1 oder 2 dargestellt.

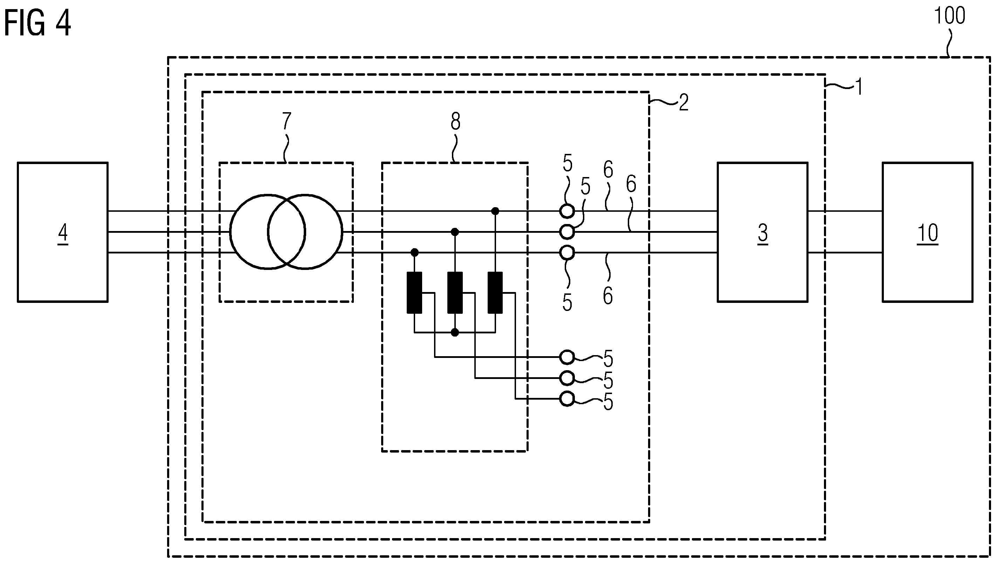

Die FIG 4 zeigt eine dreiphasige Ausgestaltung der Eingangsschaltung 2 und damit auch der Energieversorgungsvorrichtung 1. Zur Vermeidung von Wiederholungen wird auf die Beschreibung zu den Figuren 1 bis 3 sowie auf die dort eingeführten Bezugszeichen verwiesen. Erfindungsgemäß kommt dabei der Transformator 7 und der Spannungsteiler 8 in der Eingangsschaltung 2 zum Einsatz. Der Transformator 7 passt die Spannung der Energiequelle 4 auf das Spannungsniveau der Energieversorgungsvorrichtung 1 an und stellt eine galvanische Trennung zur Energiequelle 4 bzw. zum Energieversorgungsnetz her. Die unterschiedlichen elektrischen Potentiale an den Kontakten 5 werden dann mit Hilfe eines Spannungsteilers 8, in diesem Beispiel als Spartransformator ausgeführt, erzeugt.

Bei einem Umklemmvorgang können die Leiter 6 in allen drei Phasen auf einen anderen Kontakt 5 umgeklemmt werden. Dann wird der Stromrichter 3 eingangsseitig mit einem symmetrischen Drehspannungssystem gespeist. Alternativ ist es auch möglich, bei einem Umklemmvorgang nur genau einen Leiter 6 oder genau zwei Leiter 6 umzuklemmen. Dies erzeugt zwar ein unsymmetrisches Drehspannungssystem, aus dem der Stromrichter 3 jedoch problemlos elektrische Energie beziehen kann. Der Vorteil, nicht die Leiter aller drei Phasen bei einem Umklemmvorgang umzuklemmen, liegt darin, dass das Spannungslevel dann noch feinstufiger an den dann vorhandenen Alterungszustand angepasst werden kann. Durch diese zur Verfügung stehenden feinstufigen Spannungslevel kann das Umklemmen an sonstige Wartungsarbeiten, beispielsweise an Wartungsarbeiten des Elektrolyseurs 10, angepasst werden, da zum Wartungszeitpunkt ein optimales Spannungslevel an der Eingangsseite des Stromrichters 3 angelegt werden kann. Dies gilt für alle dreiphasigen Anordnungen, unabhängig davon, wie die unterschiedlichen elektrischen Potentiale erzeugt werden.

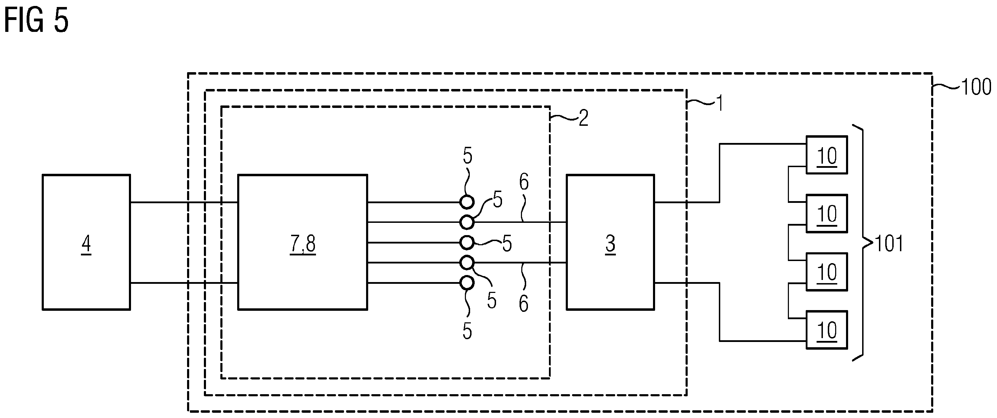

In der FIG 5 wird dargestellt, dass sich durch den Transformator 7 und den Spannungsteiler 8 eine Vielzahl von unterschiedlichen elektrischen Potentialen erzeugen lassen, mit denen eine Vielzahl von Spannungslevel zur Versorgung des Stromrichters 3 erzeugbar sind. Zur Vermeidung von Wiederholungen wird auf die Beschreibung zu den Figuren 1 bis 4 sowie auf die dort eingeführten Bezugszeichen verwiesen. Dazu weist der Spartransformator als Spannungsteiler 8 beispielsweise eine Vielzahl von Abgriffen auf. Ebenso ist es unabhängig von der Ausgestaltung der Energieversorgungsvorrichtung 1 möglich, mehrere Elektrolyseure 10 mit einer Energieversorgungsvorrichtung 1 mit elektrischer Energie zu versorgen. Dabei können die Elektrolyseure 10 in einer Reihenschaltung 101 angeordnet sein. Die Anordnung in einer Reihenschaltung 101 verstärkt den Effekt der Alterung, bei dem an die Elektrolyseure 10 im Laufe der Lebensdauer eine erhöhte Spannung anzulegen ist. Durch die einfache Möglichkeit der unterschiedlichen Spannungslevel kann dieser Nachteil auf einfache Weise beseitigt werden. Die Anordnung von mehreren Elektrolyseuren 10 an einer Energieversorgungsvorrichtung 1, beispielsweise in einer Reihenschaltung 101, kann auch für das Ausführungsbeispiel der Figur 4 vorgenommen werden.

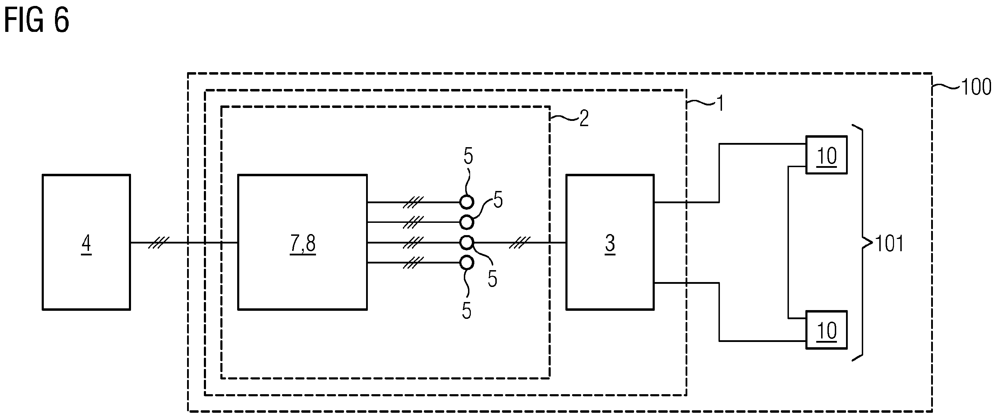

Die FIG 6 zeigt die Ausführung der Elektrolysevorrichtung 100 und damit auch die Ausführung der Energieversorgungsvorrichtung 1 mit einem dreiphasigen Spannungssystem. Dabei ist sowohl die Eingangsschaltung 2 als auch der Stromrichter 3 dreiphasig ausgebildet. Damit wird eine gleichmäßige Energieaufnahme aus der Energiequelle 4 bzw. dem Energieversorgungsnetz erzielt. Falls bei einem Umklemmen nur ein Leiter 6 von einem ersten Kontakt 5 zu einem zweiten Kontakt 5 umgeklemmt wird, so entsteht zwar eine ungleichmäßige Energieaufnahme in den einzelnen Phasen, und somit auch eine ungleichmäßige Belastung der Energiequelle 4 bzw. des Energieversorgungsnetzes, gleichzeitig kann aber eine besonders feine Abstufung der einzelnen Spannungslevel erreicht werden. Durch die vielen Spannungslevel wird das Netz wieder entlastet, so dass sich durch diese Anordnung eine besonders günstige Realisierung ohne Überdimensionierung der Energieversorgungsvorrichtung 1 bei nur gering gestiegener Belastung und damit tolerierbarer Belastung für die Energiequelle 4 ergibt.

## Patentansprüche

1. Energieversorgungsvorrichtung (1) für einen Elektrolyseur (10), wobei die Energieversorgungsvorrichtung (1) eine Eingangsschaltung (2) und einen Stromrichter (3) aufweist, wobei die Eingangsschaltung (2) eingerichtet ist, mit einer Energiequelle (4) oder einem Energieversorgungsnetz verbunden zu werden und mindestens zwei unterschiedliche, elektrische Potentiale an Kontakten (5) bereitzustellen, wobei der Stromrichter (3) eingangsseitig mittels eines jeweiligen Leiters (6) mit mindestens einem der Kontakte (5) elektrisch verbunden ist, wobei die Energieversorgungsvorrichtung (1) eingerichtet ist, dass ein Wechsel des mit dem Stromrichter (3) verbundenen Kontaktes (5) durch ein Umklemmen mindestens eines Leiters (6) der Energieversorgungsvorrichtung (1) erfolgt, wobei die Eingangsschaltung (2) einen Transformator (7) zur Anpassung der Spannung der Energiequelle (4) auf das Spannungsniveau der Energieversorgungsvorrichtung (1) aufweist, wobei der Transformator (7) eingerichtet ist, eine galvanische Trennung zur Energiequelle (4) herzustellen,
**gekennzeichnet dadurch, dass**
die Eingangsschaltung (2) einen Spannungsteiler (8), insbesondere einen induktiven Spannungsteiler oder einen kapazitiven Spannungsteiler, zur Erzeugung eines Teils der unterschiedlichen Spannungslevel aufweist.

2. Energieversorgungsvorrichtung (1) nach Anspruch 1, wobei der Transformator (7) ferner zur Erzeugung zumindest eines weiteren Teils der unterschiedlichen elektrischen Potentiale eingerichtet ist.

3. Elektrolysevorrichtung (100) aufweisend eine Energieversorgungsvorrichtung (1) nach einem der Ansprüche 1 oder 2 und einen Elektrolyseur (10), wobei der Stromrichter (3) ausgangsseitig mit dem Elektrolyseur (10) elektrisch verbunden ist.

4. Elektrolysevorrichtung (100) nach Anspruch 3, wobei die Elektrolysevorrichtung (100) eine Vielzahl von Elektrolyseuren (10) aufweist, wobei die Elektrolyseure (10) in einer Reihenschaltung (101) angeordnet sind, wobei die Reihenschaltung (101) mit dem Stromrichter (3) der Energieversorgungsvorrichtung (1) elektrisch verbunden ist.

5. Elektrolysevorrichtung (100) nach einem der Ansprüche 3 oder 4, wobei die Elektrolysevorrichtung (100) zur Erzeugung von Wasserstoff eingerichtet ist.

6. Verfahren zum Steuern einer Energieversorgungsvorrichtung (1) nach einem der Ansprüche 1 oder 2 oder einer Elektrolysevorrichtung (100) nach einem der Ansprüche 3 bis 5, wobei der Stromrichter (3) mit einem der durch die Eingangsschaltung erzeugten Spannungslevel betrieben wird, wobei zum Wechseln des Spannungslevels mindestens ein Leiter (6) der Energieversorgungsvorrichtung (1) von einem ersten Kontakt der Kontakte (5) zu einem zweiten Kontakt der Kontakte (5) manuell umgeklemmt wird.

7. Verfahren nach Anspruch 6, wobei bei einem Wechsel des Spannungslevels in einem ersten Schritt eine Energieübertragung von der Eingangsschaltung (2) zum Stromrichter (3) unterbrochen wird, wobei in einem zweiten Schritt der Leiter (6) der Energieversorgungvorrichtung (1) manuell umgeklemmt wird, wobei in einem dritten Schritt die Energieübertragung von der Eingangsschaltung (2) zum Stromrichter (3) wiederhergestellt wird.

8. Verfahren nach einem der Ansprüche 6 oder 7, wobei das Verfahren gestartet wird, wenn die ausgangsseitige Spannung des Stromrichters (3) einen festgelegten Grenzwert überschreitet.

9. Verwendung einer Energieversorgungsvorrichtung (1) nach einem der Ansprüche 1 oder 2 oder einer Elektrolysevorrichtung (100) nach einem der Ansprüche 3 bis 5 zur Erzeugung von Wasserstoff mittels Elektrolyse.

## Claims

1. A power supply device (1) for an electrolyzer (10), wherein the power supply device (1) comprises an input circuit (2) and a power converter (3), wherein the input circuit (2) is configured to be connected to a power source (4) or a power supply network and to provide at least two different electrical potentials at contacts (5), wherein the power converter (3) is electrically connected on the input side to at least one of the contacts (5) via a respective conductor (6), wherein the power supply device (1) is configured such that a change of the contact (5) connected to the power converter (3) is effected by reconnecting at least one conductor (6) of the power supply device (1), wherein the input circuit (2) comprises a transformer (7) for matching the voltage of the power source (4) to the voltage level of the power supply device (1), wherein the transformer (7) is configured to establish galvanic isolation from the power source (4), **characterized in that**
the input circuit (2) comprises a voltage divider (8), in particular an inductive voltage divider or a capacitive voltage divider, for generating a portion of the different voltage levels.

2. The power supply device (1) according to claim 1, wherein the transformer (7) is further configured to generate at least one additional portion of the different electrical potentials.

3. An electrolysis device (100) comprising a power supply device (1) according to one of claims 1 or 2 and an electrolyzer (10), wherein the power converter (3) is electrically connected to the electrolyzer (10) on the output side.

4. The electrolysis device (100) according to claim 3, wherein the electrolysis device (100) comprises a plurality of electrolysers (10), wherein the electrolysers (10) are arranged in a series connection (101), wherein the series connection (101) is electrically connected to the power converter (3) of the power supply device (1).

5. The electrolysis device (100) according to any one of claims 3 or 4, wherein the electrolysis device (100) is configured to generate hydrogen.

6. A method for controlling a power supply device (1) according to any one of claims 1 or 2, or an electrolysis device (100) according to any one of claims 3 through 5, wherein the power converter (3) is operated at one of the voltage levels generated by the input circuit, wherein, to change the voltage level, at least one conductor (6) of the power supply device (1) is manually reconnected from a first contact of the contacts (5) to a second contact of the contacts (5).

7. The method according to claim 6, wherein, upon a change in the voltage level, in a first step, energy transmission from the input circuit (2) to the power converter (3) is interrupted, wherein, in a second step, the conductor (6) of the power supply device (1) is manually reconnected, wherein, in a third step, the energy transmission from the input circuit (2) to the power converter (3) is restored.

8. The method according to any one of claims 6 or 7, wherein the method is started when the output voltage of the power converter (3) exceeds a predetermined threshold value.

9. The use of a power supply device (1) according to any of claims 1 or 2, or an electrolysis device (100) according to any of claims 3 through 5, for generating hydrogen by means of electrolysis.

## Revendications

1. Dispositif d'alimentation en énergie (1) pour un électrolyseur (10), le dispositif d'alimentation en énergie (1) comportant un circuit d'entrée (2) et un redresseur (3), le circuit d'entrée (2) étant conçu pour être connecté à une source d'énergie (4) ou à un réseau d'alimentation en énergie et pour fournir au moins deux potentiels électriques différents au niveau de contacts (5), le convertisseur de courant (3) étant connecté électriquement, côté entrée, à au moins l'un des contacts (5) au moyen d'un conducteur (6) respectif, le dispositif d'alimentation en énergie (1) étant conçu pour que le changement du contact (5) connecté au redresseur (3) s'effectue par un basculement d'au moins un conducteur (6) du dispositif d'alimentation en énergie (1), le circuit d'entrée (2) comportant un transformateur (7) pour adapter la tension de la source d'énergie (4) au niveau de tension du dispositif d'alimentation en énergie (1), le transformateur (7) étant conçu pour assurer une séparation galvanique par rapport à la source d'énergie (4), **caractérisé en ce que** :
Le circuit d'entrée (2) comporte un diviseur de tension (8), en particulier un diviseur de tension inductif ou un diviseur de tension capacitif, destiné à générer une partie des différents niveaux de tension.

2. Dispositif d'alimentation en énergie (1) selon la revendication 1, dans lequel le transformateur (7) est en outre conçu pour produire au moins une partie supplémentaire des différents potentiels électriques.

3. Dispositif d'électrolyse (100) comportant un dispositif d'alimentation en énergie (1) selon l'une des revendications 1 ou 2 et un électrolyseur (10), le redresseur (3) étant relié électriquement à l'électrolyseur (10) côté sortie.

4. Dispositif d'électrolyse (100) selon la revendication 3, dans lequel le dispositif d'électrolyse (100) comporte une pluralité d'électrolyseurs (10), les électrolyseurs (10) étant disposés en un montage en série (101), le montage en série (101) étant relié électriquement au redresseur (3) du dispositif d'alimentation en énergie (1).

5. Dispositif d'électrolyse (100) selon l'une des revendications 3 ou 4, dans lequel le dispositif d'électrolyse (100) est conçu pour produire de l'hydrogène.

6. Procédé de commande d'un dispositif d'alimentation en énergie (1) selon l'une des revendications 1 ou 2 ou d'un dispositif d'électrolyse (100) selon l'une des revendications 3 à 5, dans lequel le redresseur (3) est alimenté par l'un des niveaux de tension générés par le circuit d'entrée, et dans lequel, pour changer de niveau de tension, au moins un conducteur (6) du dispositif d'alimentation en énergie (1) est basculé manuellement d'un premier contact des contacts (5) à un deuxième contact des contacts (5).

7. Procédé selon la revendication 6, dans lequel, lors d'un changement de niveau de tension, dans une première étape, la transmission d'énergie du circuit d'entrée (2) au redresseur (3) est interrompue, dans une deuxième étape, le conducteur (6) du dispositif d'alimentation en énergie (1) est rebranché manuellement, et dans une troisième étape, la transmission d'énergie du circuit d'entrée (2) au redresseur (3) est rétablie.

8. Procédé selon l'une des revendications 6 ou 7, dans lequel le procédé est lancé lorsque la tension en sortie du redresseur (3) dépasse une valeur limite définie.

9. Utilisation d'un dispositif d'alimentation en énergie (1) selon l'une des revendications 1 ou 2 ou d'un dispositif d'électrolyse (100) selon l'une des revendications 3 à 5 pour produire de l'hydrogène par électrolyse.
